# EUROPEAN PATENT APPLICATION

(11) **EP 3 820 013 A1**
(43) Date of publication of application: **12.05.2021**
(21) Application number: 19929190.7
(22) Date of filing: 22.11.2019
(51) Int. Cl.: H02J 3/38

(54) **REMOTE POWER TRANSMISSION CONVERTER STATION AND POWER TRANSMISSION SYSTEM**

(30) Priority: 09.09.2019 CN 201910846958
(71) Applicant: GUANGDONG UNLIMITED POWER CO., LTD., Torch Development Zone Zhongshan City Guangdong 528404 (CN)
(72) Inventor: PENG, Guoping, Zhongshan City, Guangdong 528404 (CN); WANG, Hongzhan, Zhongshan City, Guangdong 528404 (CN); ZHOU, Zhiguo, Zhongshan City, Guangdong 528404 (CN); SHI, Ben, Zhongshan City, Guangdong 528404 (CN); LIU, Huimin, Zhongshan City, Guangdong 528404 (CN); XU, Yuanlong, Zhongshan City, Guangdong 528404 (CN); BAI, Daibing, Zhongshan City, Guangdong 528404 (CN)
(74) Representative: Westphal, Mussgnug Patentanwälte & Partner mbB
(86) International application number: PCT/CN2019/120233
(87) International publication number: WO 2021/047058

(57) **Abstract**

A remote power transmission converter station includes a rectifier transformer and a converter; the converter is of a diode rectification structure; and the converter and the rectifier transformer are integrally arranged on a supporting platform. A power transmission system includes an onshore convertor platform and the above converter station; an input of the converter station is connected with an external power supply device, and an output of the converter station is connected with an input of the onshore convertor platform; and an output of the onshore convertor platform is connected with an external alternating current power grid, and the onshore convertor platform is configured for converting a direct current into an alternating current. In the invention, the converter and the rectifier transformer are integrally arranged on one independent supporting platform and are not attached to a wind driven generator installation platform for installing, reducing construction difficulty, volume, cost and construction period of the converter station, and further reducing difficulty in offshore power transmission. The diode rectification structure is employed, further reducing the volume of the converter, while improving the power transmission efficiency. An alternating current auxiliary power supply system is arranged, further ensuring sustainable operation of the system.

## Description

### FIELD

The present invention belongs to the field of remote power transmission, and more particularly, relates to a remote power transmission converter station and a power transmission system.

### BACKGROUND

With development of offshore wind power industry, exploration of a novel direct current grid connection scheme for offshore wind power with low cost and high reliability has become an urgent task for industrial development. Although flexible direct current power transmission has advantages of a small occupied area, a small volume and the like compared with traditional direct current power transmission, the flexible direct current power transmission still cannot be fully applied to large-scale and long-distance offshore wind power grid connection.

At present, a current conversion method using an uncontrolled diode rectifier instead of a controllable rectifier has been studied at home and abroad. Compared with a fully controlled rectification mode employed for a flexible direct current, a diode rectification mode is able to further reduce a volume and a cost of a device, thus being very suitable for a rectification end of an offshore wind power field (WPF). In addition, relevant parties have studied installation of a rectifier transformer and a diode rectifier on a supporting platform of a wind turbine, conversion of alternating current of each wind turbine into direct current, and transmission of the direct current onshore through a submarine cable. However, the mode may increase weight and volume of the supporting platform of the wind turbine, thus being not suitable for grid-connected access of offshore long-distance and large-capacity wind turbine group. Moreover, power collection system of an offshore alternating current wind power field has complicated topological structure and unbalanced line impedance, so that it is difficult achieve voltage balance for the serial platforms, resulting in more complicated control.

### SUMMARY

In order to solve the above problems, the present invention provides a remote power transmission converter station which is simple in structure and may be integrally installed and a power transmission system.

The technical solutions used in the present invention to solve the technical problems are as follows.

There is provided a remote power transmission converter station, including a rectifier transformer and a converter, wherein a primary side of the rectifier transformer is configured for connection with an external power generation field, and a secondary side of the rectifier transformer is connected with an input of the converter;
the converter is of a diode rectification structure; and the converter and the rectifier transformer are integrally arranged on a supporting platform.

Preferably, the rectifier transformer includes a plurality of groups of secondary sides; the converter includes a plurality of sub-converters with a same number as the secondary sides of the rectifier transformer; each of the secondary sides of the rectifier transformer is connected with a respective one of inputs of the sub-converters; and outputs of adjacent sub-converters are sequentially connected to form a sub-converter series structure, and two outputs of the sub-converter series structure are respectively used as a positive voltage output and a negative voltage output of the converter.

Preferably, the positive voltage output and the negative voltage output of the converter are both connected with a smoothing reactor, or a function selection switch or a series structure of the smoothing reactor and the function selection switch, and the function selection switch is configured for connecting with, disconnected from or grounding a circuit.

Preferably, each of the plurality of sub-converters is of a three-phase bridge six-pulse rectification structure.

Preferably, each of outputs of the plurality of sub-converters is connected with a sub-smoothing reactor.

Preferably, each of outputs of the plurality of the sub-converter is connected in parallel with a sub-bypass switch.

Preferably, an alternating current filter is provided at an input of the rectifier transformer; and the alternating current filter and the converter are arranged on a same supporting platform.

Preferably, an output of the converter is connected in parallel with a bypass switch; and the bypass switch and the rectifier transformer are arranged on a same supporting platform.

Preferably, the external power generation field includes a wind power generation field or a photovoltaic electric field.

There is provided a power transmission system, including an onshore convertor platform and the converter station described above;

an input of the converter station is connected with the external power generation field, and an output of the converter station is connected with an input of the onshore convertor platform; and
an output of the onshore convertor platform is configured for connection with an external alternating current power grid, and the onshore convertor platform is configured for converting a direct current into an alternating current.

Preferably, the converter stations are provided in plural; outputs of the plurality of converter stations are sequentially connected in series and then connected with the onshore convertor platform.

Further, the onshore convertor platform includes a convertor station and an onshore transformer; an input of the convertor station is connected with the output of the converter station, and an output of the convertor station is connected with an input of the onshore transformer; and an output of the onshore transformer is configured for connection with the external alternating current power grid.

Further, the convertor station includes six bridge arms each including a plurality of power modules sequentially connected in series, and each of the plurality of power modules is of a half-bridge structure and/or a full-bridge structure for converting the direct current into the alternating current.

Preferably, each of the six bridge arms of the convertor station is connected with a CT transformer, or a bridge-arm smoothing reactor, or a series structure of the CT transformer and the bridge-arm smoothing reactor.

Preferably, the power transmission system further includes an alternating current auxiliary power supply system, wherein an input of the alternating current auxiliary power supply system is connected with the output of the onshore convertor platform or an external power supply, and an output of the alternating current auxiliary power supply system is connected with the input of the converter station by a power distribution device; and the alternating current auxiliary power supply system is configured for auxiliary power supply to the external power generation field.

Preferably, the alternating current auxiliary power supply system is connected with the input of the converter station through the power distribution device.

Further, the alternating current auxiliary power supply system includes an auxiliary power supply device and an offshore alternating current cable; and the auxiliary power supply device is configured for auxiliary power supply to the external power generation field.

Further, the auxiliary power supply device includes a first alternating current circuit breaker, a transformer and a second alternating current circuit breaker which are sequentially connected in series, and the transformer is configured for voltage regulation.

Further, the transformer is a regulating transformer, a power electronic converter, or of a series structure of the regulating transformer and the power electronic converter.

Preferably, the onshore convertor platform and the converter station are connected through a high-voltage submarine cable.

Preferably, the onshore transformers are provided in plural, inputs of the plurality of onshore transformers connected in parallel are connected with the outputs of the convertor stations, and outputs of the plurality of onshore transformers are connected with the external alternating current power grid.

The embodiments of the present invention have the beneficial effects as follows.

The converter and the rectifier transformer are integrally arranged on one independent supporting platform and are not attached to a wind driven generator installation platform for installing, reducing construction difficulty, volume, cost and construction period of the converter station, and further reducing difficulty in offshore power transmission.

The diode rectification structure is employed, and a three-phase bridge six-pulse rectifier structure is preferably used, further reducing volume of the converter, and improving power transmission efficiency.

Power transmission by one converter station or combined power transmission by multiple converter stations can be realized, and power can be supplied after one converter station is established, without the need to wait for finishing establishment of the whole power supply system, thus realizing effects of staged establishment and phased establishment.

The alternating current auxiliary power supply system is arranged, which can further ensure sustainable operation of the system.

### BRIEF DESCRIPTION OF THE DRAWINGS

The specific embodiments of the present invention are further described hereinafter with reference to the accompanying drawings, in which:
FIG 1 is a structure diagram of a converter station according to an embodiment of the present invention;
FIG 2 is a structure diagram of a sub-converter according to an embodiment of the present invention;
FIG. 3 is a structure diagram of a power transmission system according to an embodiment of the present invention;
FIG. 4 is a structure diagram of a convertor station according to an embodiment of the present invention;
FIG. 5 is a diagram of a half-bridge structure of a power module according to an embodiment of the present invention; and
FIG. 6 is a diagram of a full-bridge structure of the power module according to an embodiment of the present invention.

### DETAILED DESCRIPTION OF THE EMBODIMENTS

The present invention is further described in detail hereinafter with reference to the accompanying drawings.

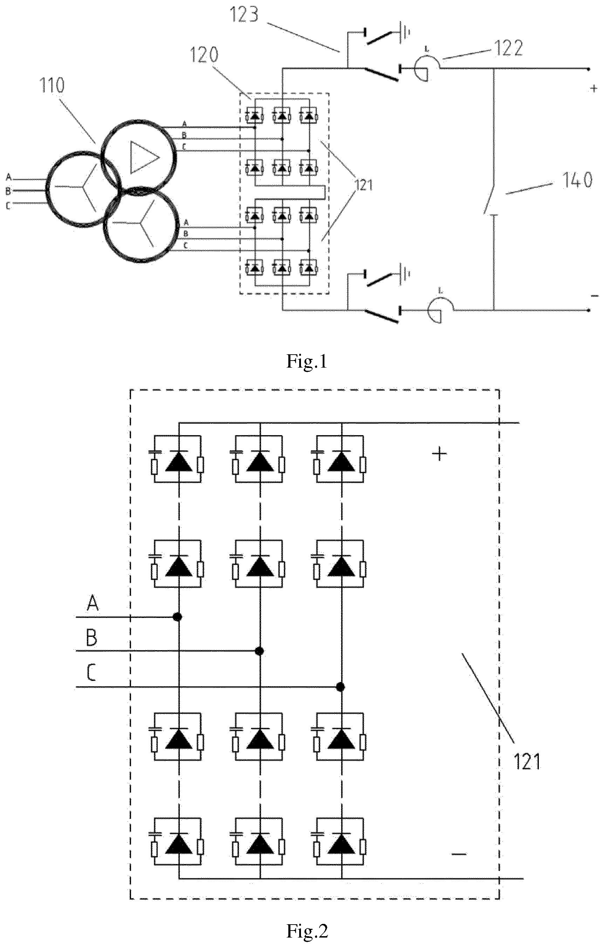

As shown in FIG. 1, a remote power transmission converter station includes a rectifier transformer 110 and a converter 120. A primary side of the rectifier transformer 110 is used in an external power generation field, and a secondary side of the rectifier transformer is connected with an input of the converter 120.

A diode rectification structure is employed for the converter 120. The converter 120 and the rectifier transformer 110 are integrally arranged on a supporting platform.

The external power generation field includes a wind power generation field or a photovoltaic electric field. The wind power generation field is preferably used in the embodiment.

The rectifier transformer 110 includes a plurality of groups of secondary sides. The converter 120 includes a plurality of sub-converters 121 with a same number as the secondary sides of the rectifier transformer 110. Each of the secondary sides of the rectifier transformer 110 is connected with a respective one of inputs of the sub-converters 121. Outputs of adjacent sub-converters 121 are sequentially connected to form a sub-converter series structure, and two outputs of the sub-converter series structure are respectively used as a positive voltage output and a negative voltage output of the converter 120.

In the embodiment, the rectifier transformer 110 is in a form of three-winding Y/Y/D, which is connected with two sub-converters 121 connected in series. The rectifier transformer 110 may also be of a multi-winding phase-shifting structure, which is provided with N (N=2 or 3, 4, etc.) secondary sides, and N converters 121 each of which is connected with a respective one of the N secondary sides of the rectifier transformer 110.

The positive voltage output and the negative voltage output of the converter 120 are both connected with a smoothing reactor 122, a function selection switch 123 or a series structure of the smoothing reactor 122 and the function selection switch 123. The function selection switch 123 is configured for selectively connecting with, disconnecting from or grounding a circuit. With reference to FIG. 1, the series structure of the smoothing reactor 122 and the function selection switch 123 is preferably used in the embodiment.

As shown in FIG. 2, the plurality of sub-converters 121 all use a three-phase bridge-type six-pulse rectification structure, and each sub-converter 121 includes an A-phase module, a B-phase module and a C-phase module connected in parallel. Each phase module includes a first diode valve string and a second diode valve string connected in series, and a common connecting end of the first diode valve strings and a common connecting end of the second diode valve strings are configured for connection with an external alternating current power supply. The first diode valve string and the second diode valve string both include a plurality of diode valves connected in parallel and/or in series. The number and connection relationship of the diode valves depend on voltage and current (the number of the diode valves connected in series depends on existing voltage and the number of the diode valves connected in parallel depends on existing current).

In the embodiment, all the diode valves in each phase module are of the same structure, which specifically includes a first capacitor, a first resistor, a second resistor and a first diode. The first capacitor is connected in series with the first resistor and then connected in parallel with the first diode, the first capacitor is connected with a negative pole of the first diode, and the second resistor is connected in parallel with the first diode.

In the embodiment, preferably, outputs of the plurality of sub-converters 121 are connected with a sub-smoothing reactor (not shown in the drawings) and a sub-bypass switch (not shown in the drawings), the sub-bypass switch may bypass the failed sub-converter 121, or the sub-smoothing reactor or the sub-bypass switch may be used separately.

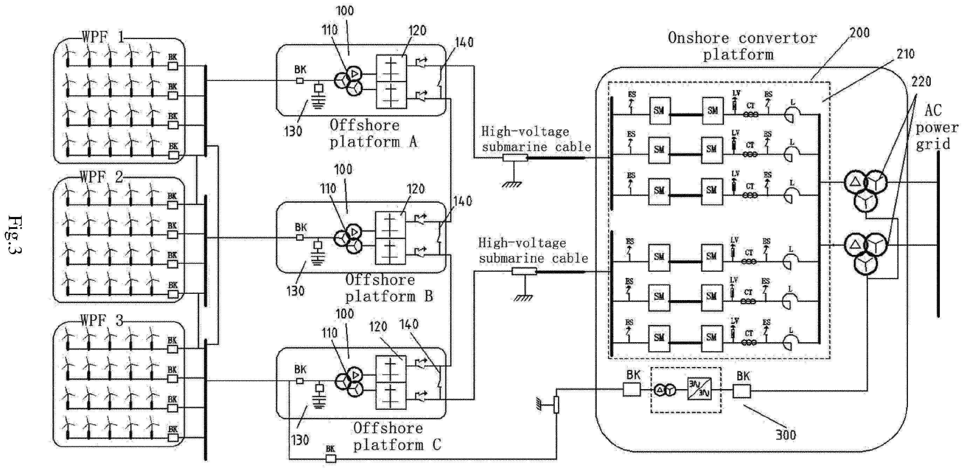

In the embodiment, an alternating current filter 130 is provided at an input of the rectifier transformer 110 as shown in FIG. 3, and the alternating current filter 130 and the converter 120 are arranged on a same supporting platform.

In the embodiment, outputs of the converter 120 are connected in parallel with the bypass switch 140 which, in the case of a failure, is turned off, thus realizing bypass communication of a failed circuit, and playing a better role in maintenance and troubleshooting together with the function selection switch 123. The bypass switch 140 and the rectifier transformer 110 are arranged on the same supporting platform.

In the embodiment, a filter unit (not shown in the drawings) may be arranged at the input of the converter 120 to achieve a better filtering effect.

In the embodiment, by using a diode rectifier mechanism, volume of the whole converter station 100 can be further reduced.

In the embodiment, the converter station 100 is integrally installed on one supporting platform and is able to be installed on an offshore supporting platform, thus further reducing difficulty in offshore remote power transmission.

As shown in FIG. 3, a power transmission system includes an onshore convertor platform 200 and the above converter station 100. An input of the converter station 100 is connected with an external power supply device, and an output of the converter station is connected with an input of the onshore convertor platform 200. An output of the onshore convertor platform 200 is connected with an external alternating current power grid, and the onshore convertor platform 200 is configured for converting a direct current into an alternating current.

In the embodiment, a plurality of converter stations 100 are provided. Outputs of the plurality of converter stations are sequentially connected in series and then connected with the onshore convertor platform 200.

As shown in FIG. 3, in the embodiment, three converter stations 100 are used and arranged on offshore platforms A, B and C respectively.

The onshore convertor platform 200 includes a convertor station 210 and an onshore transformer 220. An input of the convertor station 210 is connected with the output of the converter station 100, and an output of the convertor station is connected with an input of the onshore transformer 220. An output of the onshore transformer 220 is configured for connection with the external alternating current power grid.

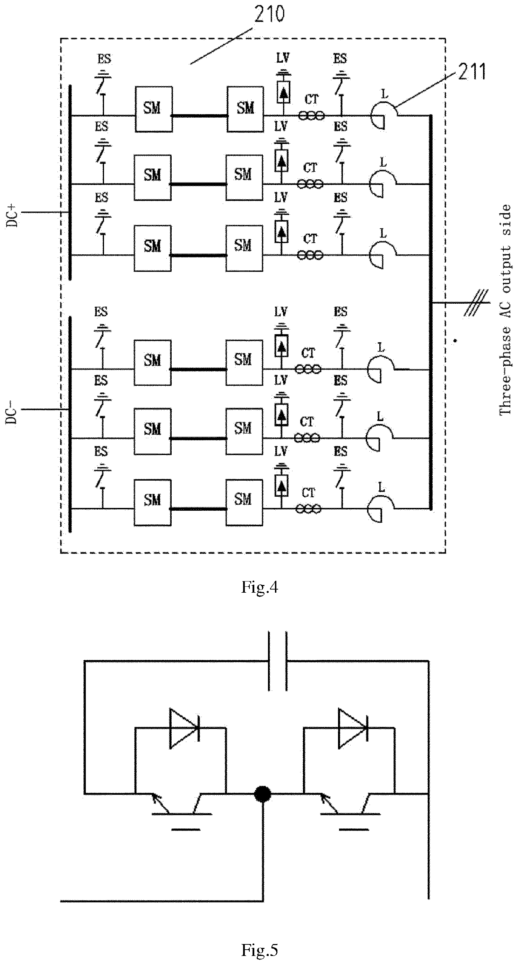

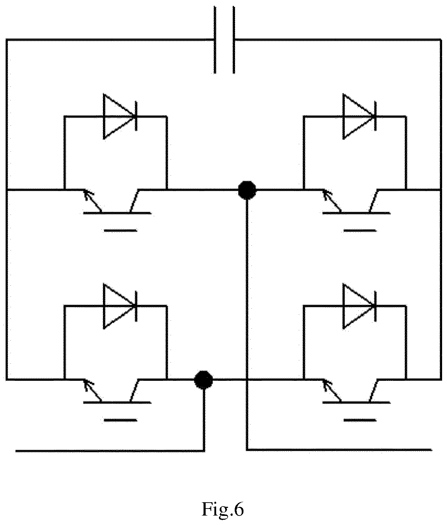

As shown in FIG. 4, in the embodiment, the convertor station 210 uses a MMC (modular-multilevel-converter) structure, and the convertor station 210 includes six bridge arms, which all include a plurality of power modules sequentially connected in series, and the plurality of power modules are all configured for converting the direct current to the alternating current. All of the plurality of power modules are of a half-bridge structure and/or a full-bridge structure as shown in FIG. 5 and FIG. 6.

The six bridge arms of the convertor station 210 are all connected with a CT transformer, a bridge-arm smoothing reactor 211 or a series structure of the CT transformer and the bridge-arm smoothing reactor 211. The series structure of the CT transformer and the bridge-arm smoothing reactor 211 is preferably used in the embodiment.

During actual operation, since the diode rectifier can only be configured for power transmission in one direction from the rectifier transformer 100 to the convertor station 210, a wind power field must be supplied with energy it required in other ways. Therefore, the above power transmission system is further provided with an alternating current auxiliary power supply system 300. An input of the alternating current auxiliary power supply system 300 is connected with the output of the onshore convertor platform 200 or an external power supply, and an output of the alternating current auxiliary power supply system is connected with the input of the converter station 100 by a power distribution device. The alternating current auxiliary power supply system 300 is configured for auxiliary power supply to the external power generation field.

In the embodiment, the alternating current auxiliary power supply system 300 is connected with the input of the converter station 100 through a power distribution device. Specifically, a power distribution cabinet may be used.

In the embodiment, the alternating current auxiliary power supply system 300 includes an offshore alternating current cable and an onshore auxiliary power supply device. The auxiliary power supply device include a first alternating current circuit breaker, a transformer and a second alternating current circuit breaker which are sequentially connected in series, and the transformer is configured for voltage regulation.

The transformer may use a regulating transformer, a power electronic converter or a series structure of the regulating transformer and the power electronic converter. In the embodiment, the series structure of the regulating transformer and the power electronic converter is specifically used to realize a voltage regulation function.

In the embodiment, the onshore convertor platform 200 and the converter station 100 are connected by a high-voltage submarine cable, thus having better stability and safety.

A plurality of onshore transformers 220 are provided, inputs of the plurality of onshore transformers 220 connected in parallel are connected with the outputs of the convertor stations 210, and outputs of the plurality of onshore transformers are connected with the external alternating current power grid.

In the embodiment, two onshore transformers 220 are connected in parallel, thus improving a stability of the whole system well.

The above is only the preferred embodiments of the present invention, and the present invention is not limited to the above embodiment, and any technical means that can achieve the object of the present invention by substantially the same means shall fall within the scope of the present invention.

## Claims

1. A remote power transmission converter station, comprising a rectifier transformer (110) and a converter (120), wherein a primary side of the rectifier transformer (110) is configured for connection with an external power generation field, and a secondary side of the rectifier transformer is connected with an input of the converter (120);
the converter (120) is of a diode rectification structure; and the converter (120) and the rectifier transformer (110) are integrally arranged on a supporting platform.

2. The remote power transmission converter station according to claim 1, wherein the rectifier transformer (110) comprises a plurality of groups of secondary sides; the converter (120) comprises a plurality of sub-converters (121) with a same number as the secondary sides of the rectifier transformer (110); each of the secondary sides of the rectifier transformer (110) is connected with a respective one of inputs of the sub-converters (121); and outputs of adjacent sub-converters (121) are sequentially connected to form a sub-converter series structure, and two outputs of the sub-converter series structure are respectively used as a positive voltage output and a negative voltage output of the converter (120).

3. The remote power transmission converter station according to claim 2, wherein the positive voltage output and the negative voltage output of the converter (120) are both connected with a smoothing reactor (122), or a function selection switch (123) or a series structure of the smoothing reactor (122) and the function selection switch (123), and the function selection switch (123) is configured for connecting with, disconnected from or grounding a circuit.

4. The remote power transmission converter station according to claim 2, wherein each of the plurality of sub-converters (121) is of a three-phase bridge six-pulse rectification structure.

5. The remote power transmission converter station according to claim 2, wherein each of outputs of the plurality of sub-converters (121) is connected with a sub-smoothing reactor.

6. The remote power transmission converter station according to claim 2, wherein each of outputs of the plurality of the sub-converter (121) is connected in parallel with a sub-bypass switch.

7. The remote power transmission converter station according to claim 1, wherein an alternating current filter (130) is provided at an input of the rectifier transformer (110); and the alternating current filter (130) and the converter (120) are arranged on a same supporting platform.

8. The remote power transmission converter station according to claim 1, wherein an output of the converter (120) is connected in parallel with a bypass switch (140); and the bypass switch (140) and the rectifier transformer (110) are arranged on a same supporting platform.

9. The remote power transmission converter station according to claim 1, wherein the external power generation field comprises a wind power generation field or a photovoltaic electric field.

10. A power transmission system, comprising an onshore convertor platform (200) and the converter station (100) according to any one of claims 1 to 9, wherein:
an input of the converter station (100) is connected with the external power generation field, and an output of the converter station is connected with an input of the onshore convertor platform (200); and
an output of the onshore convertor platform (200) is configured for connection with an external alternating current power grid, and the onshore convertor platform (200) is configured for converting a direct current into an alternating current.

11. The power transmission system according to claim 10, wherein the converter stations (100) are provided in plural; outputs of the plurality of converter stations (100) are sequentially connected in series and then connected with the onshore convertor platform (200).

12. The power transmission system according to claim 10, wherein the onshore convertor platform (200) comprises a convertor station (210) and an onshore transformer (220); an input of the convertor station (210) is connected with the output of the converter station (100), and an output of the convertor station is connected with an input of the onshore transformer (220); and an output of the onshore transformer (220) is configured for connection with the external alternating current power grid.

13. The power transmission system according to claim 12, wherein the convertor station (210) comprises six bridge arms each comprising a plurality of power modules sequentially connected in series, and each of the plurality of power modules is of a half-bridge structure and/or a full-bridge structure for converting the direct current into the alternating current.

14. The power transmission system according to claim 13, wherein each of the six bridge arms of the convertor station (210) is connected with a CT transformer, or a bridge-arm smoothing reactor (211), or a series structure of the CT transformer and the bridge-arm smoothing reactor (211).

15. The power transmission system according to claim 10, further comprising an alternating current auxiliary power supply system (300), wherein an input of the alternating current auxiliary power supply system (300) is connected with the output of the onshore convertor platform (200) or an external power supply, and an output of the alternating current auxiliary power supply system is connected with the input of the converter station (100) by a power distribution device; and the alternating current auxiliary power supply system (300) is configured for auxiliary power supply to the external power generation field.

16. The power transmission system according to claim 15, wherein the alternating current auxiliary power supply system (300) is connected with the input of the converter station (100) through the power distribution device.

17. The power transmission system according to claim 15, wherein the alternating current auxiliary power supply system (300) comprises an auxiliary power supply device and an offshore alternating current cable; and the auxiliary power supply device is configured for auxiliary power supply to the external power generation field.

18. The power transmission system according to claim 17, wherein the auxiliary power supply device includes a first alternating current circuit breaker, a transformer and a second alternating current circuit breaker which are sequentially connected in series, and the transformer is configured for voltage regulation.

19. The power transmission system according to claim 18, wherein the transformer is a regulating transformer, a power electronic converter, or of a series structure of the regulating transformer and the power electronic converter.

20. The power transmission system according to claim 10, wherein the onshore convertor platform (200) and the converter station (100) are connected through a high-voltage submarine cable.

21. The power transmission system according to claim 12, wherein the onshore transformers (220) are provided in plural, inputs of the plurality of onshore transformers (220) connected in parallel are connected with the outputs of the convertor stations (210), and outputs of the plurality of onshore transformers are connected with the external alternating current power grid.
